# EUROPÄISCHE PATENTANMELDUNG

(11) **EP 0 829 736 A2**
(43) Veröffentlichungstag der Anmeldung: **18.03.1998**
(21) Anmeldenummer: 97115300.2
(22) Anmeldetag: 04.09.1997
(51) Int. Cl.: G01V 3/08

(54) **Verfahren zum Messen von Verzerrungen des Erdmagnetfeldes und Objektsensor zur Durchführung des Verfahrens**

(30) Priorität: 13.09.1996 CH 2248/96
(71) Anmelder: MetaPhysics S.A., 1424 Champagne (CH)
(72) Erfinder: Vockenhuber, Peter, 1427 Villars-Burquin (CH); Wagnières, Phillipe, 1400 Yverdon les Bains (CH)
(74) Vertreter: Révy von Belvárd, Peter

(57) **Zusammenfassung**

Ein Sensor (20) zum Messen der durch einen ferromegnetischen Körper (1) hervorgerufenen Verzerrungen des Erdmagnetfeldes wird in der Nähe des zu messenden Körpers (1) eingesetzt. Der Messertgeber (20b) des Sensors (20) ist im Vergleich zur Grösse des festzustellenden Objektes (1) relativ klein, um Überlagerungen von bei einem grösseren Objekt vorhandenen magnetischen Inhomogenitäten zu vermeiden. Neben einer Hauptkomponente des Erdmagnetfeldes wird aber auch noch eine weitere Komponente ausgewertet, um die Verzerrungen des Feldes unzweideutig der Überdeckung des jeweiligen Messertgebers (20b) durch den festzustellenden Körper (1) zuordnen zu können.

## Beschreibung

Die Erfindung bezieht sich auf ein Verfahren nach dem Oberbegriff des Anspruches 1, sowie auf einen Objektsensor zur Durchführung dieses Verfahrens.

Sensoren für das Erdmagnetfeld sind bekannt. Sie dienen hauptsächlich der Feststellung von Verzerrungen dieses Feldes auf Grund der Anwesenheit ferromagnetischer Objekte. So beschreibt Förster in **Z. Metallkunde**, 46 (1955), Seite 358ff, eine Sonde zur Messung von magnetischen Feldern, die unter anderem dazu verwendet wird, um Verzerrungen des Erdmagnetfeldes zu messen. In einem Beispiel (Seite 366) zeigt Förster, wie mit dem beschriebenen Sensor die Verzerrung des Erdmagnetfeldes, die von unterirdischen Eisenteilen ausgehen, gemessen und diese Eisenteile solcherart geortet werden können.

Im Kongressband der Sensormesse 1995 in Nürnberg wird im Beitrag C02.3 von Petersen, Muth und Schintag ein Sensor beschrieben, der in der Lage ist, vorbeifahrende Fahrzeuge festzustellen und zu zählen, und dies anhand der von ihnen bewirkten Verzerrungen des Erdmagnetfeldes. In diesem Falle wird der Betrag der Z-Komponente des Erdmagnetfeldes, die in mittleren Breiten gegen den Erdmittelpunkt geneigt ist, dazu verwendet, um ein vorbeifahrendes Fahrzeug zu erkennen. Es werden dabei sowohl diejenigen Erdmagnetfeldverzerrungen wiedergegeben, die durch einen bestimmten Fahrzeugtyp hervorgerufen werden als auch die durch ein Motorrad hervorgerufenen.

Kurz gesagt, werden also im allgemeinen Sensoren zur Messung der Verzerrung des Erdmagnetfeldes dazu eingesetzt, um eisenhaltige bzw. ferromagnetische Objekte zu erkennen bzw. festzustellen, die sich in der Nähe der Sonde befinden. Denn, bedingt durch das ferromagnetische Material in den Objekten, werden die Feldlinien des Erdmagnetfeldes verdichtet, und es kommt dadurch zu einem lokalen Maximum des Erdmagnetfeldes in Richtung des Objektes. Dieser Effekt eignet sich z.B. sehr gut für Sonden zur Feststellung unterirdischer oder in Mauern eingebrachter Eisenteile, zur Verkehrszählung, zur Schaltung von Verkehrsampeln, zur Zündung von Panzerabwehrminen bei Annäherung solcher Fahrzeuge etc.

Eine weitere Anwendung für einen derartigen Sensor besteht in der Erkennung, ob geparkte Fahrzeuge oder Container sich in einer bestimmten Überdeckungszone aufhalten. Diese Anwendung kann beispielsweise zur Bewirtschaftung von Parkplätzen oder Parkhäusern verwendet werden, wie beispielsweise in der Europäischen Patentanmeldung Nr. 92 913 669.5 (Schick) beschrieben wird.

Eine andere Methode, um festzustellen, ob sich ein ferromagnetisches Objekt im Umfeld des Sensors befndet, besteht darin, den Gradienten des Erdmagnetfeldes zu messen (siehe Förster Seite 362). Diese Messung kann für Ortungsaufgaben von eisenhaltigen Gegenständen verwendet werden. Dabei wird die Tatsache ausgenutzt, dass das Erdmagnetfeld im Naturzustand homogen ist, das heisst, dass die Dichte der Feldlinien sehr konstant ist. Wird ein ferromagnetischer Körper in dieses Feld eingebracht, so wird die Homogenität des Feldes gestört, da es zu einer Feldlinienverdichtung im Zentrum des Körpers, und zu einer entsprechenden Ausdünnung an seinem Rande kommt. Dies ergibt einem Gradienten der Feldverteilung, der von seinem natürlichen Wert von nahezu Null abweicht und festgestellt werden kann.

Zusammenfassend kann man sagen, dass es gemäss dem Stand der Technik im wesentlichen zwei Methoden gibt, mit denen unter Ausnutzung des Erdmagnetfeldes ferromagnetische Objekte festgestelltt werden, wobei entweder eine Hauptkomponente, wie die Z-Komponente, gemessen wird, oder der Gradient des Erdmagnetfeldes.

Diese Methoden gemäss dem Stande der Technik weisen drei wesentliche Nachteile auf, die ihrer weiteren Verbreitung entgegenstehen:
1. Die Auswertung des Z-Vektors bezieht sich immer auf die gedachte Verbindungslinie zwischen dem Objekt und dem Sensor unter dem Inklinationswikel. Der Sensor weist daher je nach geographischer Breite eine mehr oder weniger ausgeprägte Fehlmessung auf.
2. Ausser an den Polen bewirkt damit diese Fehlmessung einen Ortungsfehler für das ferromagnetische Objekt, der vom Abstand zur Sonde abhängt. Wenn man aber auch eine derartige Sonde in die unmittelbare Nähe des Objekts, und damit in eine Lage mit geringem Ortungsfehler, bringt - d.h. dass der Abstand zwischen dem ferromagnetischem Objekt und dem Sensor klein im Vergleich zu den Abmessungen des ferromagnetischen Objektes gewählt wird - so erkennt man nur dessen magnetische Feinstruktur, wobei man wegen der Mehrdeutigkeit der Messwerte nicht mehr sagen kann, ob ein Objekt im Messfeld ist, oder nicht.
   Sensoren, die die Z-Komponente auswerten, funktionieren daher erst ab einem gewissen Abstand vom Messobjekt - d.h. dass der Abstand zwischen dem ferromagnetischem Objekt und dem Sensor relativ gross im Vergleich zu den Abmessungen des ferromagnetischen Objektes gewählt werden muss - wobei es dann je nach Abstand und geographischer Breite zu einer mehr oder weniger ausgeprägten Fehlmessung kommt.
3. Gradientenmessungen können dagegen nur dann einen Aufschluss über die Gegenwart eines ferromagnetischen Objekts geben, wenn eine ausgedehnte Messzone mit ihnen abgefahren wird. Dies hat seine Ursache darin, dass die Feldlinien durch den magneischen Schwerpunkt eines Objekts ungebrochen hindurchgehen, und daher in der Mitte eines Objektes gar kein Gradient auftritt, sondern nur an seinen Rändern. Somit lässt sich das Objekt mit solchen Messungen dann nicht feststellen, wenn die Messung allein im Bereiche der Mitte eines Objektes durchgeführt würde.

All diese Nachteile führen dazu, dass Erdmagnetfeldsonden heute nur marginal zur Erkennung von ferromagnetsichen Objekten verwendet werden, und dass gemäss dem Stand der Technik praktisch nur aktive Messprinzipien zum Einsatz kommen, die aber dementsprechend mit Energie zu versorgen sind. So werden zum Beispiel zum Erkennen von geparkten Fahrzeugen in Garagen Ultraschall-Entfernungsmesser verwendet, oder es werden im Boden verlegte Induktionsschleifen zur Erkennung des Fahrzeugs angewandt. Beide Messprinzipien benötigen viel Energie, und erfordern entweder einen grossen Abstand vom Objekt (Fahrzeug - Ultraschall-Abstandssensor), oder eine Sonde mit Abmessungen die der des Fahrzeugs vergleichbar sind (Induktionsschleife), was baulich schon einen gewissen Aufwand bedeutet.

Zwar sind bereits die verschiedensten Anordnungen vorgeschlagen worden, um Sensoren der eingangs genannten Art wenigstens für die Anwendung der Feststellung des Vorhandenseins bewegter Objekte auszubilden. Beispiele solcher Vorschläge sind den DE-A-35 21 655, 43 02 426, 43 41 695 und der EP-A-0 740 279 zu entnehmen. Mit all diesen Techniken ist aber nicht möglich, auch noch einen dritten Zustand, nämlich 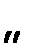 Objekt vorhanden, aber unbewegt 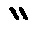 , festzustellen, d.h. ein auf einer Strasse oder in einem Parkhaus stehendes Auto lässt sich damit nicht mehr zweifelsfrei feststellen.

Der vorliegenden Erfindung liegt daher die Aufgabe zugrunde, die oben erwähnten Nachteile der herkömmlichen Sensoren zu überwinden. Dies gelingt erfindungsgemäss durch die Kombination der Merkmale des Kennzeichens von Anspruch 1.

Dabei liegt der Erfindung im wesentlichen die Erkenntnis zugrunde, dass die oben beschriebenen Nachteile der Sensoren gemäss dem Stand der Technik am besten dadurch behoben werden können, dass mehr als nur eine Komponente des Erdmagnetfeldes zur Auswertung herangezogen wird, um so die Verzerrungen des Feldes unzweideutig der Überdeckung durch den festzustellenden Körper zuordnen zu können. Wenn im Zusammenhang mit den Dimensionen des Messwertgebers der Ausdruck "klein im Vergleich ..." gebraucht wird, so soll darunter ein Grössenverhältnis der Abmessungen von maximal 1:2, vorzugsweise maximal 1:4, insbesondere maximal 1:8, verstanden werden. Eine von einer zu messenden Komponente abgeleitete physikalische Grösse kann z.B. bevorzugt der Absolutwert des Gradienten der Z-Komponente der Feldstärke, aber auch die Kombination der Z-Konmponente mit einer Horizontalkomponente sein. Wie später noch erläutert wird, ermöglicht es aber die Abspeicherung eines vorbestimmten Zustandes praktisch drei Zustände festzustellen, nämlich das Vorhandensein eines bewegten und das eines unbewegten Objektes sowie das Fehlen einer Magnetfeldstörung (Ruhezustand).

Die Massnahme nach Anspruch 2 wird in den meisten Fällen angewandt werden, weil beim erfindungsgemässen Verfahren, wie schon beim oben geschilderten Stande der Technik nach Petersen et al., ein geringer Abstand eine bessere Feststellbarkeit der Objekte ergibt, im Falle der Erfindung jedoch ohne die oben beschriebenen Nachteile. Wenn in diesem Zusammenhange der Ausdruck "klein im Vergleich ..." gebraucht wird, so soll darunter ein Abstand verstanden werden, der maximal das Zweihundertfache, vorzugsweise maximal das Hundertfache, insbesondere maximal das Fünfzigfache, der Abmessungen des Sensors ausmacht.

Die Genauigkeit kann weiter verbessert werden, wenn nach Anspruch 4 vorgegangen wird, weil damit jedem der Messwertgeber eine spezifische Aufgabe zugeteilt und dieser daher leichter optimiert werden kann. Gegebenenfalls kann damit sogar eine Vereinfachung der Auswerteschaltung erreicht werden.

Dementsprechend besitzt ein Objektsensor zur Durchführung des erfindungsgemässen Verfahrens die Merkmale des Anspruches 7.

Insbesondere wenn die Bedingung nach Anspruch 2 bzw. Anspruch 3 schwer zu erfüllen ist, ist die Ausbildung im Sinne des Anspruches 10 von besonderem Nutzen, da sie es gestattet, die Messwertgeber an den verschiedensten Orten unterzubringen, so dass damit wenigstens einer dieser Sensoren in der Nähe des festzustellenden Objektes liegt. Anderseits könnte ein solches Sensorkabel dazu benutzt werden, eine ganze Reihe von Komponenten bzw. abgeleiteten Grössen zur Feststellung eines ferromagnetischen Objektes heranzuziehen.

Weitere Einzelheiten der Erfindung werden nachstehend anhand von in der Zeichnung schematisch dargestellten Ausführungsbeispielen beschrieben. Es zeigen:
- Fig. 1: eine Darstellung einer Messanordnung zum Feststellen von Fahrzeugen;
- Fig. 2a: das Messprinzip eines Erdmagnetfeldsensors nach dem Stande der Technik; wozu
- Fig. 2b: in einem Diagramm die daraus gewonnenen Signale veranschaulicht;
- Fig. 3a bis 3c: die Anwendung dieses Messprinzips nach Fig. 1, wobei Fig. 3a eine einem Teil der Fig. 1 ähnliche Darstellung für die Messung an einem Kraftfahrzeug ist, Fig. 3b die entlang des Kraftfahrzeuges gewonnenen Signale in einem Diagramm und Fig. 3c die Signale in einer räumlichen Darstellung zeigt; an Hand der
- Fig. 4a bis d: wird das erfindungsgemässe Verfahren erläutert; und
- Fig. 5: stellt einen erfindungsgemässen Objektsensor dar.

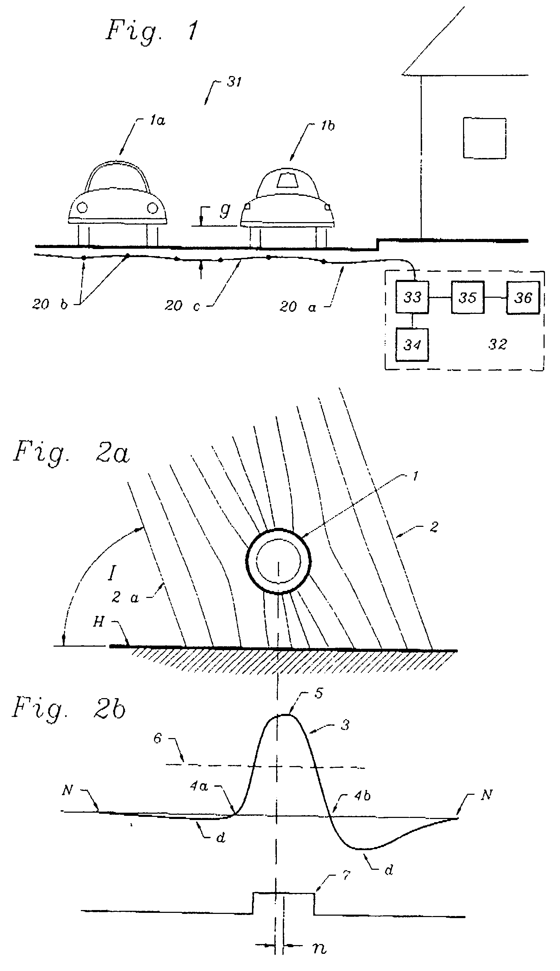

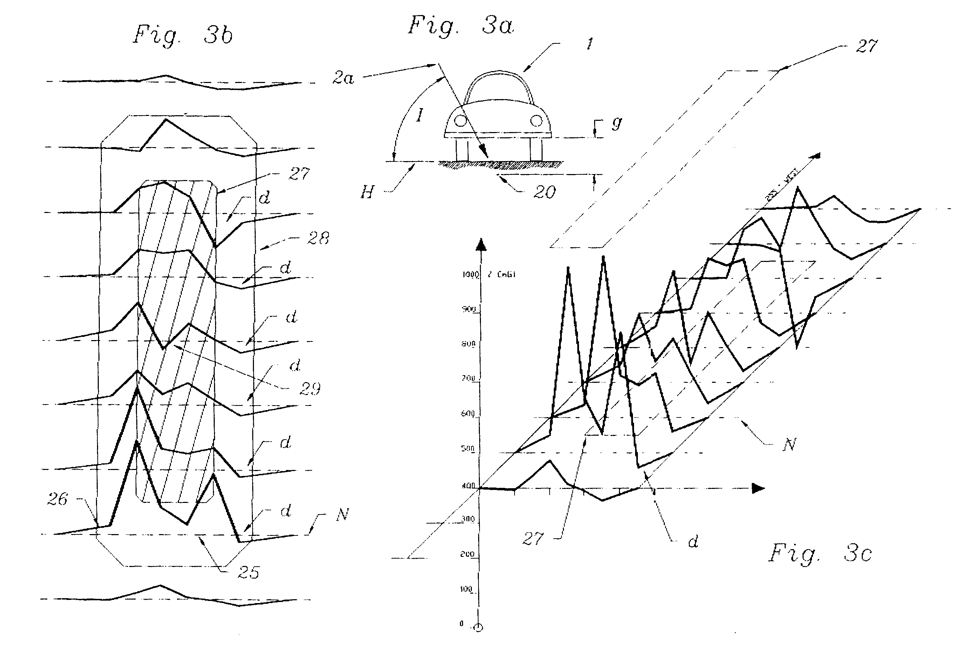

Gemäss Fig. 1 ist an einer Strasse 31 mit Verkehr in beiden Richtungen ein kabelartiger Sensor 20a im Strassenboden verlegt. Damit sollen die ferromagnetischen Körper von Fahrzeugen 1a, 1b festgestellt werden. Bei erfindungsgemässer Ausbildung wird dieser als Sensorkabel ausgebildete Sensor 20a eine Mehrzahl von Messwertgebern 20b in vorbestimmten Abständen voneinander aufweisen. Die Messwertgeber 20b sind einzeln adressierbar und liegen in einem Abstande g von der Unterseite der festzustellenden Fahrzeuge 1a, 1b, der im allgemeinen zwischen 20 und 30 cm liegen und für gewöhnlich 40 cm nicht überschreiten wird. Die Messwertgeber 20b sind demgegenüber, wie ersichtlich, relativ klein, wobei der Abstand g vorzugsweise maximal das Zweihundertfache, vorzugsweise maximal das Hundertfache, insbesondere maximal das Fünfzigfache, der Abmessungen des Messwertgebers 20b ausmacht. Die Grösse der Messwertgeber 20b soll zwar im Vergleich zum festzustellenden Fahrzeug 1a oder 1b so klein wie möglich sein, zumal sich an Hand der Fig. 3b und 3c noch zeigen wird, dass entlang eines Fahrzeuges die örtlichen Messsignale äusserst unterschiedlich sind und sich bei zu grossen Abmessungen eine Überlagerung der einzelnen Signalformen mit entsprechendem Ortungsfehler ergeben würde, doch kann das Grössenverhältnis der Abmessungen von Messwertgeber 20b zu denen des Objekts im Rahmen der Erfindung bevorzugt maximal 1:2, vorzugsweise maximal 1:4, insbesondere maximal 1:8, betragen. Noch kleinere Verhältnisse, wie maximal 1:20, 1:50 oder gar 1:100 sind noch günstiger. Je nach dem festzustellenden Objekt, für das der Messwertgeber ausgelegt werden soll sind auch Grössenverhältnisse von 1:200 bis 1:500 möglich.

Das Kabel 20c selbst ist als Bus ausgebildet, das an eine Auswerteeinrichtung 32 angeschlossen ist. Diese Auswerteeinrichtung 32 umfasst in bei Sensorkabeln an sich bekannter Weise eine Abfrageeinheit 33, die von einer Adressiereinheit 34 angesteuert wird, um die Messwerte der einzelnen Messwertgeber 20a abzufragen. Hiezu besitzt jeder Messwertgeber 20b eine ihm zugeordnete Adresse. Alternativ wird die unterschiedliche Impedanz entlang des Sensorkabels 20c zur Adressierung der einzelnen Messwertgeber 20b herangezogen, wie dies in der US-A-5,450,072 vorgeschlagen wurde, deren Inhalt hier durch Bezugnahme als geoffenbart gelten soll. Unter Umständen ist es sogar möglich, mehrere, z.B. zwei, Messwertgeber 20b gleichzeitig abzufragen, was besonders bei einem einzigen Sensorkabel 20c für Verkehr in beiden Richtungen zweckmässig sein kann.

Dadurch, dass die Messwertgeber in der geschilderten Weise adressierbar sind, lässt sich der das Messsignal abgebende Messwertgeber 20b identifizieren, so dass klar ist, ob nun das festgestellte Fahrzeug in der einen oder in der anderen Richtung fährt. Darüber hinaus ermöglicht es die Ausbildung als Sensorkabel mit einer Vielzahl von in Abständen angeordneten Messwertgebern, dass der Abstand g wesentlich die Qualität der Messung bestimmt, da etwa von dem vom Fahrzeug überdeckten Flächenbereich weiter abliegende Messwertgeber einen grösseren wirksamen Abstand zum Fahrzeug 1a oder 1b haben werden als direkt unter diesem liegende. Die Ausbildung als Sensorkabel sichert dagegen, dass mindestens ein Messwertgeber unter das Fahrzeug 1a oder 1b zu liegen kommt.

Der Ausgang der Abfrageeinheit 33 liegt an einer Auswerteeinrichtung 35, zweckmässig mit einem Speicher, die mit einer Ausgabeeinheit 36, wie einem Monitor, einem Drucker oder einer anderen Anzeigeeinrichtung verbunden ist, wobei auch hier vorteilhaft diejenige Schaltung zur Anwendung kommt, die in der genannten US-A-5,450,072 vorgeschlagen wird.

Fig.2a zeigt den Effekt, der durch einen ferromagnetischen Körper 1 in einem magnetischen Feld, zum Beispiel im Erdmagnetfeld, hervorgerufen wird. Dessen Feldlinien 2 werden nämlich im magnetischen Körper 1, bei dem es sich im Beispiel um ein hohles Rohr handelt, verdichtet. Dabei sind die Feldlinien 2, wie aus Fig. 2a hervorgeht in einem vom Körper 1 ungestörten Bereich homogen, und die Feldliniendichte ist in diesem Bereiche konstant. Die Feldlinien 2 fallen unter einem Inklinationswinkel I ein, der zwischen einer horizonalen Ebene H und der Feldlinienrichtung 2a gebildet ist. Die Feldstärke entspricht der in Fig. 2b gezeigten Feldliniendichte 3.

Betrüge der Inklinationswinkel I genau 90°, so wäre die Kurvenform der Feldstärke unter dem symmetrischen Körper 1 ebenfalls symmetrisch. Da jedoch der Inklinationswinkel I im Beispiel der Fig. 2a weniger als 90° beträgt, ist die Kurvenform etwas verzerrt und asymmetrisch. Am Feldstärkenverlauf sieht man deutlich, dass die Kurve vom natürlichen Wert N zuerst abfällt, wodurch eine Feldstärkendepression d enststeht. Dann steigt sie wieder an, um an Punkten 4a und 4b wieder auf das Niveau des natürlichen Wertes N zu kommen, worauf sie bis zu einem Maximalwert 5 ansteigt.

Wenn man durch Feldstärkenmessung feststellen will, ob sich ein Gegenstand in der Nähe eines Sensors oder einer Sonde befindet, kann man von einem festen Schwellwert 6 ausgehen, wobei bei Überschreiten dieses Schwellwertes auf die Anwesenheit eines ferromagnetischen Objektes 1 geschlossen wird, sonst nicht.

Die Rechteckurve 7 in Fig. 2b zeigt ein derartiges aus der Überschreitung des Schwellwertes 6 abgeleitetes Signal, wie es im wesentlichen von einem Detektor gemäss dem Stand der Technik abgegeben wird. Man sieht auch, dass der Ort, an dem der Gegenstand von der Sonde erkannt wird, um einem Betrag n gegenüber der Lage des Rohres 1 in Fig. 2a versetzt ist, der sowohl vom Inklinationswinkel I als auch von der jeweiligen Entfernung des Sensors zum festzustellenden Objekt 1 abhängen wird. Dieser Betrag n führt zu einem Ortungsfehler, der sich je nach Anwendung störend auswirken kann.

Will man nun diesen Ortungsfehler ausschalten, so scheint es das einfachste zu sein, den Sensor möglichst nahe an das festzustellende Objekt 1 heranzubringen. Tatsächlich funktioniert dies auch sehr gut, da, wie man am Verlauf der Feldlinien 1 der Fig. 2a feststellen kann, deren Inhomogenität um so mehr zunimmt, je mehr man sich dem Objekte 1 nähert. Wie zu erwarten, werden dabei die Abweichungen der Feldstärke vom natürlichen Wert N immer grösser, je näher man sich dem Objekte 1 nähert. Durch eine derartige Annäherung an das Objekt kann man daher den Ortungsfehler n weitgehend ausschalten, auch wenn der Inklinationswinkel I um 45° beträgt.

In der Praxis hat es sich allerdings gezeigt, dass dieses Prinzip nicht funktioniert, da sich bei Annäherung an das ferromagnetische Objekt 1 immer mehr auch seine magnetische Feinstruktur auf das gewonnene Signal auswirkt. Natürlich würde ein Detektor bei vollkommen homogenen Objekten einwandfrei funktionieren. Wenn man allerdings messen will, ob sich im Überdeckungsbereich geparkte Fahrzeuge oder Container befinden kann man nicht davon ausgehen, dass diese Objekte magnetisch vollkommen homogen sind.

In den Fig. 3a bis 3c wird eine solche reale Situation wiedergegeben, wie sich das Erdmagnetfeld im Nahfeld eines Fahrzeuges 1 verhält. Bei einer Anordnung gemäss Fig. 3a zeigt Fig. 3b den Feldstärkeverlauf, wie er von einer Magnetfeldsonde 20 gemessen wird, die sich etwa 10 cm unterhalb des Fahrzeuges 1 befindet.

Die Messanordnung nach Fig. 3a zeigt wiederum den Vektor 2a des Erdmagnetfeldes, der um den Inklinationswinkel I geneigt ist. Dies ist ein typischer Wert in Europa und Nordamerika. Das Fahrzeug 1 ist dabei mit seiner Vorderseite ungefähr nach Westen zeigend ausgerichtet.

Der in Fig. 3b wiedergegebe Feldstärkeverlauf in Form von Kurven, die entlang des Fahrzeuges 1 der Fig. 3a aufgenommen wurden, entspricht den Erwartungen gemäss den vorhergehenden Betrachtungen an einem inhomogenen magnetischen Körper. Da es sich beim Fahrzeug 1 um ein solches mit vorne angeordnetem Motor handelt, werden die Feldlinien deutlich im vorderen Bereich 25 mit der steilere Zacken an den Rändern eines vom Fahrzeug 1 überdeckten Bereiches 27 aufweisenden Kurve 26 konzentriert. Der natürliche Wert N von ca. 0.4 Gauss ist in Fig. 3b strichliert eingezeichnet.

Man sieht auch, dass die durch das Fahrzeug hervorgerufene Verzerrung des Feldes bei den in einem Abstand von etwa 50cm bis 70cm aufgenommenen Messsignalkurven 3' und 3'' bis auf den natürlichen Wert abfällt. Eine Zone 28, innerhalb der das Fahrzeug 1 den Messwert beeinflusst, ist daher etwas grösser als das Fahrzeug 1 mit dem eigentlichen Überdeckungsbereich 27. Ab etwa 40 cm und darunter werden die Kurven für die Feststellung des Fahrzeuges 1 signifikanter.

In Fig. 3c sind dieselben Messwerte in einer dreidimensionalen Darstellung wiedergegeben. Dabei sind auf der Z-Achse die Feldstärkewerte der Z-Komponente des Erdmagnetfeldvektors eingetragen. Diese betragen im vorliegenden Falle etwa 400 mG. In der Fig. 3c ist die Überdeckungszone 27 um den Inklinationswinkel I (vgl. Fig. 3a) schräg oberhalb sowie unterhalb der Messignalkurven eingezeichnet. Wie man am Koordinatensystem sehen kann, ist der vom Fahrzeug 1 hervorgerufene Effekt im Vergleich zur natürlichen Feldstärke N an sich signifikant, wenngleich die einzelnen Messignalkurven auf Grund der Feinstruktur des Fahrzeuges 1, d.h. auf Grund unterschiedlichen Vorliegens ferromagnetischer Teile desselben, über die Länge des Fahrzeuges 1 sehr unterschiedlich sind. Man sieht auch deutlich die Feldlinienkonzentration im Norden des Fahrzeuges 1 (in Fig. 3b und 3c links am Rande des Überdeckungsbereiches 27), die durch den relativ grossen Inklinationswinkel I hervorgerufen wird. Ferner sieht man, dass es an der Südseite des Fahrzeuges 1 (in Fig. 3b und 3c rechts zwischen dem Überdekkungsbereich 27 und der Beeinflussungszone 28) zu einer Felddepression d kommt. Der Feldverlauf entspricht zwar den Erwartungen für einen homogenen Körper, doch ergeben sich dann Probleme, wenn man die Auswertung des Feldverlaufs an Hand der Überschreitung eines festen Schwellwertes, wie des Schwellwertes 6 in Fig. 2b, vornehmen will.

Zunächst sieht man (Fig. 3b und 3c), dass der Feldverlauf erwartungsgemäss nach Norden (links) verschoben ist. Dies kann man jedoch mittels eines nach Süden versetzten Ortes der Anbringung eines Sensors kompensieren. Die grösseren Schwierigkeiten bei der Auswertung der Messungen zur Erkennung des Fahrzeuges 1 entstehen jedoch durch Felddepressionen, die sich innerhalb der Überdeckungszone 27 befinden. Wie man am Beispiel der Fig. 3b und 3c sehen kann, kommt es zu einer derartigen Felddepression 29 etwa in der Mitte des Fahrzeuges 1.

Diese mittige Felddepression 29 kommt wie folgt zustande: Durch den Motor und die Hinterachse, die sehr stark ferromagnetisch sind, erfolgt eine starke Konzentration von Feldlinien. So steigt die Feldstärke im Bereich der Vorderräder bis über den doppelten natürlichen Wert N an. Die Anziehung der Feldlinien von den magnetischen Schwerpunkten an diesen beiden, einander entgegengesetzten Enden des Fahrzeuges 1 bewirken dann deren Ausdünnung in der Mitte. Dazu kommt, dass im Mittenbereich der Länge des Fahrzeuges 1 die Feldlinien durch Karosserieteile an den Seiten konzentriert werden. Das Resultat ist, wie man in Fig. 3b sehen kann, ein Feldstärkenwert unter dem Fahrzeug, der sogar noch unter den natürlichen Wert N abfällt.

Eine Sonde, die eine der Hauptkomponenten des Erdmagnetfeldes, wie die Z-Komponente, misst, könnte daher an diesem Ort gar kein Fahrzeug erkennen. Ebenso würde eine Sonde, die zum Zählen vorbeifahrender Fahrzeuge eingesetzt wird, nicht unterscheiden können, ob nun ein oder zwei Fahrzeuge vorbeigefahren sind.

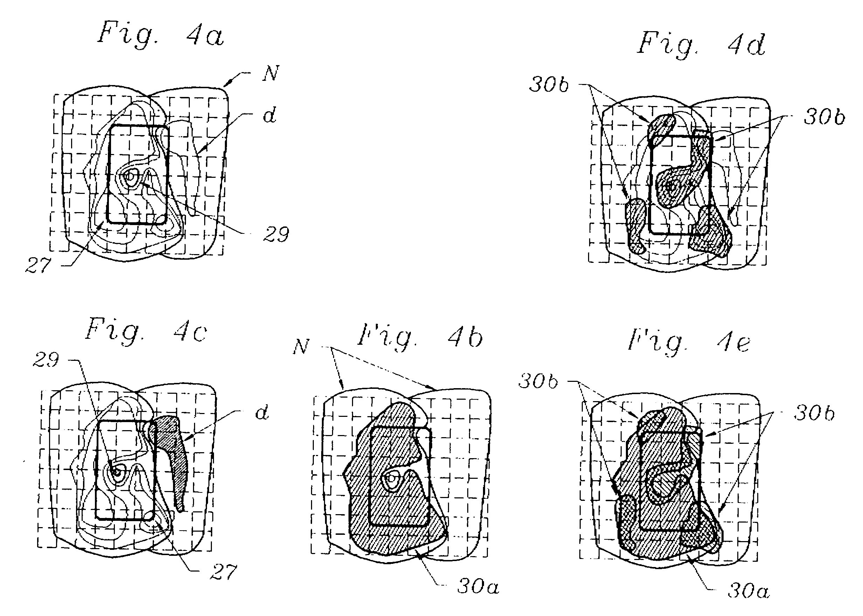

In Fig. 4a sind die Messungen gemäss den Fig. 3 in der Form von Linien gleicher Feldstärke dargestellt. Man erkennt, dass, ausgehend von der natürlichen Feldstärke N, in einem Teil der Überdeckungszone 27, die Feldstärke im vorderen und hinteren Bereich des Fahrzeuges sowie auf dessen Nordseite (links in Fig. 4a) ansteigt. An der Südseite (rechts in Fig. 4a) hingegen, und in der Mitte des Fahrzeuges kommt es zu einer Depression d bzw. 29 der Feldstärke unter den natürlichen Wert N.

In Fig. 4b sind jene Bereiche 30a schraffiert gezeichnet, in denen die Feldstärke wenigstens 100 mG über dem natürlichen Wert N beträgt. Ein Sensor mit festem Schwellwert (6 in Fig. 2b) würde in einem solchen Bereich 30a das Fahrzeug erkennen.

In Fig. 4c sind jene Bereiche schraffiert gezeichnet, in denen eine Feldstärkendepression d bzw. 29 auftritt. Eine solche Feldstärkendepression d kommt an der Südseite (rechts in Fig. 4c) der Überdeckungszone 27, eine Feldstärkendepression 29 in deren Mitte zustande.

Fig. 4d veranschaulicht in schraffierten Bereichen 30b eine bevorzugte, aus der Feldstärke abgeleitete Grösse, nämlich den Absolutwert des Gradienten der Z-Komponente der Feldstärke. Man sieht, dass diese Grösse gerade im problematischen Bereich, nämlich in der Mitte des Fahrzeuges, grosse Werte aufweist. Die in Fig. 4d schraffiert gezeichneten Bereiche 30b weisen alle für diese abgeleitete physikalische Grösse hohe Werte auf. Somit sieht man aus den Fig. 4b, 4c und 4d, dass keine der drei, im Beispiel dargestellten physikalischen Grössen jweils für sich alleine eine homogene Überdeckungszone mit ausreichender Erkennungssicherheit ergeben.

Wenn man jedoch gemäss der vorliegenden Erfindung zwei oder mehrere Eigenschaften des Erdmagnetfeldes kombiniert, kommt man zu einer Überdeckungszone, die die Kontouren des Fahrzeuges ausreichend gut wiedergeben. Am Beispiel der Fig. 4e wird dies anhand einer bevorzugten Ausführungsform des erfindungsgemässen Verfahrens gezeigt, wobei die Messungen nach den Fig. 4b und 4d einander ergänzen und eine ODER-Kombination (30a ODER 30b) der Überschreitung eines festen Schwellwertes in einem der unterschiedlich schraffierten Bereiche 30a und 30b einerseits der Z-Komponente (in Fig. 4b 100 mGauss über dem natürlichen Wert N) und anderseits des Absolutwertes des Gradienten (Fig. 4d) zur Auswertung der Messung herangezogen werden.

Natürlich kann anstelle des Absolutwerts des Gradienten auch eine andere geeignete abgeleitete Grösse bzw. Eigenschaft des Vektors des Erdmagnetfeldes herangezogen werden. Dies kann insbesondere in geographischen Breiten von Vorteil sein, in denen der Inklinationswinkel I sehr klein ist. Zum Beispiel könnte man die Kombination der Z-Konmponente mit einer Horizontalkomponente zur Auswertung verwenden. Dies ist möglich, da, wenn die Z Komponente auf oder unter den natürlichen Wert absinkt, die Feldlinien in Richtung zum Vorderteil und zum Hinterteil des Fahrzeuges (Fig. 4a) abgelenkt werden. Ist dies der Fall, so weist daher eine Horizontalkomponete eine grosse Abweichung von ihrem natürlichen Wert auf, und kann zur Ergänzung der Überdeckungszone 27 auf ähnliche Weise herangezogen werden, wie dies in Fig. 3e an Hand der Kombination mit dem Absolutwert des Gradienten der Z Komponente gezeigt wird.

Selbstverständlich ist es auch möglich, die Überdeckungszone durch eine weitere ergänzende ODER-Kombination mit einer weiteren Komponente zu ergänzen und derart an die Konturen des zu detektierenden Objektes anzunähern. So kann man an Hand der Fig. c und 4e sehen, dass die, im Süden des Fahrzeuges (links in Fig. c) auftretende Feldstärkendepression d dazu herangezogen werden kann, die Überdeckungszone gemäss Fig. 4e zu komplettieren. Diese nähert sich an der südlichen Hinterseite des Fahrzeuges an die Fahrzeugkonturen an, wogegen sie in allen anderen Bereichen des Fahrzeugs in einem Abstand von ca. 50 bis 70 cm den Fahrzeugkonturen (Konturen des Überdeckungsbereichs 27) folgt. Nimmt man nun etwa die Feldstärkendepression d gemäss Fig. 4c in einer ODER-Kombination hinzu, so kann man die Überdeckungszone schon wesentlich besser den Fahrzeugkonturen anpassen.

Ferner sind auch andere logische Verknüpfungen von Feldstärkeeigenschaften geeignet, eine gut angepasste Überdeckungszone für einen Objektsensor sicherzustellen. Dies ist besonders dann interessant, wenn die Sonden zur Efassung der Eigenschaften des Erdmagnetfeldes an verschiedenen Stellen angebracht sind. Dadurch wird nämlich der Einsatz von Auswertealgorithmen möglich, deren Komplexität über die einer einfachen ODER-Verknüpfung hinausgehen. So kann man auf die Präsenz eines Fahrzeugs schliessen, wenn eine im Nordbereich liegende Sonde eine positive Schwellwertüberschreitung meldet UND eine im Süden liegende Feldstärkendepression.

Eine besonders vorteilhafte Ausführungsform ergibt sich dann, wenn eine Vielzahl von Messonden 20b an einem Sensorkabel 20c (Fig. 1) angeordnet werden, deren Signale in einem Auswerte-Computer 32 zur Information verarbeitet wird, ob Fahrzeuge im Bereiche des Sensorkabels 20c vorhanden sind, und wenn ja, an welchen Orten. Die Ausführungsform als Sensorkabel weist u.a. den Vorteil auf, dass zur Auswertung der Signale zur Objekterkennung der gesamte Feldverlauf einer oder mehrerer Eigenschaften des Erdmagnetfeldes über eine gewisse Strecke herangezogen werden kann. Insoferne stellt diese Ausbildung einen gesonderten, auch unabhängig von der Messung von mindestens zwei Komponenten des Erdmagnetfeldes, vorteilhaften und erfinderischen Gedanken dar.

Die Heranziehung mehrerer Sonden ermöglicht die Anwendung leistungsfähiger Algorithmen. Beispiele für derartige Algorithmen sind dem Fachmann wohlbekannt; vorteilhafte Verfahren sind beispielsweise der aus anderem Zusammenhang, nämlich der Mustererkennung, bekannte "Clustering"-Algorithmus oder der ebenfalls bekannte Algorithmus "neuronaler Netzwerke".

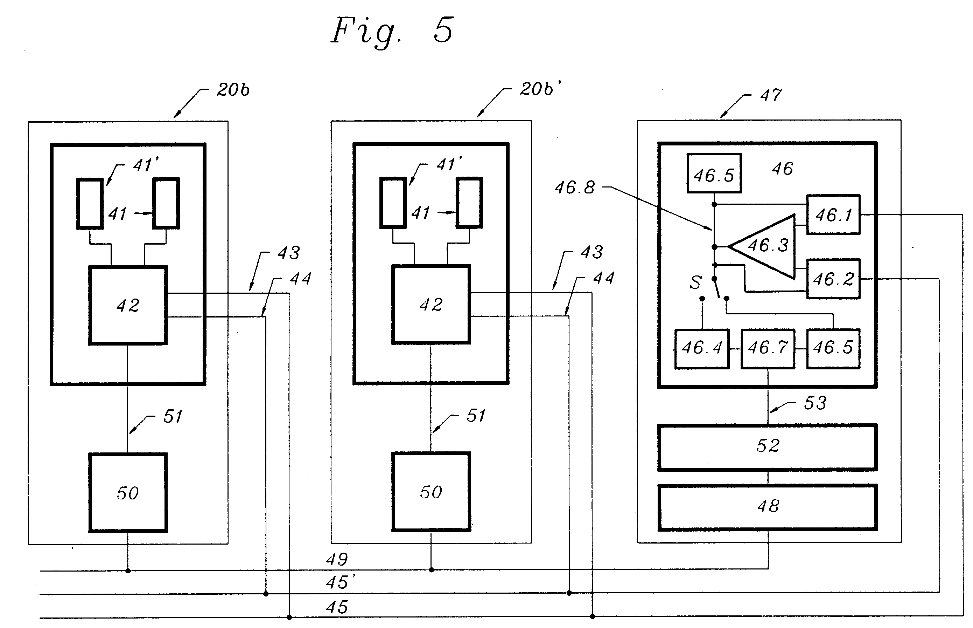

Fig. 5 zeigt eine mögliche Schaltung sowie den Aufbau eines bevorzugten erfindungsgemässen Objektsensors. Das Beispiel der Fig. 5 geht von einer Sonde gemäss Förster et al. aus, die, wie im eingangs zitierten Artikel beschrieben, sowohl als Feldsonde, als auch als Feldgradientensonde verwendet werden kann, indem beispielsweise zwei Spulen als magnetisch sensible Elemente (vgl. 41) im Gleichsinn angesteuert werden (Förster, S. 359, Bild 4 für die Feldstärkemessung, S. 360, Bild 7 für Differenzfeldmessung).

Dies ist jedoch auch mit anderen Sonden möglich; insbesondere kann mit einer Anordnung, wie sie im eingangs zitierten Artikel von Schintag et al. beschrieben wird, und die auf einer Brückenschaltung von magnetisch sensiblen Elementen beruht, ebenfalls durch entsprechende Beschaltung sowohl die Feldstärke als auch deren Gradient mit nur einem Wandlerelement gemessen werden.

Derartige Sonden sind jedoch keineswegs für die Erfassung von Objekten gemäss der Erfindung erforderlich. So kann beispielsweise die Messung der Z-Komponente und von deren Gradienten durch zwei nebeneinanderliegende Sensoren vorgenommen werden, deren Signaldifferenz ein Signal ergibt, das dem Feldstärkegradienten proportional ist, wogegen jeder Wert für sich der Feldstärke einer Komponente proportional ist. Dies stell einen weiteren Vorteil von mehreren nebeneinanderliegenden Messwertgebern dar, wie sie in einem Sensorkabel vorliegen können.

Im Beispiele der Fig. 5 wird daher von einer Art von Sonden ausgegangen, die je nach ihrer Aussenbeschaltung entweder eine Komponente des Erdmagnetfeldes messen können oder deren Gradienten. Eine derartige, zweifach auswertbare Sonde 40 besteht aus zwei magnetisch sensiblen Elementen 41 und 41'. Dabei kann es sich um Spulen nach Förster handeln, es kann sich jedoch auch um die magnetisch sensiblen Bestandteile einer Brückenschaltung handeln, die in einem gewissen Abstande voneinander angeordnet sind.So könnten beispielsweise auch zwei möglichst gleiche Hallsonden als magnetisch sensible Elemente 41 und 41' verwendet werden, die in einem gewissen Abstand voneinander angeordnet sind.

Die Auswerteeinheit 42 der Fig. 5 besteht aus einer Schaltung, die - ausgehend von den Signalen der beiden magnetisch sensiblen Elemente 41 und 41' - an ihrem Ausgange 43 ein Signal erzeugt, das einer Hauptkomponente der Feldstärke proportional ist, und ein zweites Signal an ihrem Ausgange 44, das dem Feldstärkegradienten proportional ist.

Dabei kann es sich um eine kombinierte Ansteuer- und Auswerteschaltung gemäss Förster et al. (Bild 4 und 7, S. 359 und 360) handeln, oder um eine Brückenschaltung gemäss Schintag et al. mit Mehrfachauswertung. Weiter kann es sich dabei auch einfach um eine solche Schaltung handeln, die die Signale von zwei Sonden 41 und 41', wie Hallsonden, einmal in ein Differenzsignal für den Gradienten umsetzt und einmal in ein gemitteltes Summensignal für die Feldstärke, sei es nun nacheinander (sequentiell) oder parallel.

Die Feldstärkensignale und die Differenzsignale der Feldstärke nach Fig. 5 werden parallel (ODER-Verknüpfung) je einem Feldstärkenleiter 45 und einem Feldstärkendifferenzleiter 45' zugeführt, der die entsprechenden Signale von den Messwertgebern 20b und 20b' an eine zentrale Auswerteeinheit 47 (entsprechend 32 in Fig. 1) führt. Diese weist ein Speicherelement 46 auf, in das die Daten aus den Signalleitern 45 und 45' nach einer Analog/Digital-Umwandlung innerhalb eines, z.B. mit dem Speicher 46 baulich vereinigten Analog/Digitalwandlers, eingeschrieben werden.

Dieser Analog/Digitalwandler ist jeweils unmitelbar an den Eingängen der Signalleiter 45, 45' in die Auswerte- und Speicherstufe 46 bzw. 47 vorgesehen und entweder von Stufen 46.1, 46.2 unmittelbar gebildet oder diese letzteren Stufen stellen (allenfalls zusätzlich) Zwischenspeicher für das von den Leitungen 45, 45' kommende Signal dar. Der Ausgang der Stufen 46.1, 46.2 liegt an gegebenenfalls einer Vergleichsstufe 46.3, welche das jeweils gegebene Verhältnis ermittelt.

Dieser, im allgemeinen durch Software ersetzten, Eingangsschaltung sind zwei Speicherblöcke 46.4, 46.5 nachgeschaltet, die über das Schliessen oder Öffnen eines (Um-)Schalters S wahl- und wechselweise aktivierbar sind. Die zum Schalter S führende und an die Ausgänge der Stufen 46.1 bis 46.3 angeschlossene Leitung 46.8 ist hier als einfache Leitung dargestellt, tatsächlich aber beispielsweise ein Bus, der die Ausgangssignale der Eingangsstufen 46.1 bis 46.3 jeweils gesondert zum Schalter S bzw. zum jeweiligen Speicherblock 46.4 oder 46.5 bringt.

Der eine Speicher 46.4 wird nur in einer Lernphase, im allgemeinen beim erstmaligen Installieren des Sensors an einem vorbestimmten Ort, mittels des Schalters S aktiv geschaltet. Dabei werden die Signale der Eingangsstufen 46.1, 46.2 und/oder der Vergleichsstufe 46.3 in einem Ruhezustand (z.B. 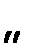 Parkplatz nicht belegt 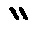 oder 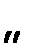 Strasse nicht befahren 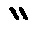 ) als Bezugssignale eingespeichert. Dann ist der 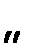 Lernvorgang 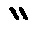 abgeschlossen, und der Schalter S kann entsprechend auf den jeweils anderen Speicherblock 46.5 umschalten. Da der Lernvorgang im allgemeinen nur einmalig am Anfang durchzuführen sein wird, kann an Stelle des Schalters S auch eine Zeitsteuerung vorgesehen sein, die während einer gewissen Anfangszeit nach der Inbetriebnahme des Sensors die Eingangssignale erst dem Lernspeicher 46.4 und dann erst dem Betriebsspeicher 46.5 zuführt. Dies ist jedoch nicht bevorzugt, da gegebenenfalls zum Nacheichen, bzw. bei Betriebsänderungen eine neuerliche Lernphase vorgesehen werden kann, wenn eine willkürliche Schaltmöglichkeit, wie mit dem Schalter S vorhanden ist. Eine andere Möglichkeit bestünde darin, den Lernspeicher 46.4 mit einem Statistikprogramm zu versehen, um statistisch zu ermitteln, welche Signalkombinationen wohl als Ruhesignal und welches als Signal 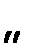 Belegt 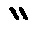 anzusehen ist. Beispielsweise könnte sich an einer Strasse im Nachbetrieb eine grössere Häufigkeit von Ruhezuständen ergeben als am Tage, und bei Einspeisung der Zeit könnte daraus die Eingangssignalkombination für den Ruhezustand statistisch ermittelt werden.

Im Betrieb werden dann die Eingangssignale der Stufen 46.1 bis 46.3 über den Speicherblock 46.5 an eine Vergleichsstufe 46.7 gesandt, die auch, taktmässig synchron, die entsprechenden Signale des Lernspeichers 46.4 erhält. Es ist ersichtlich, dass gegebenenfalls aber auf den Betriebsspeicher 46.5 verzichtet werden kann, wenn die Eingangssignale der Stufen 46.1, 46.2 und/oder 46.3 unmittelbar an die Vergleichstufe 46.7 herangeführt werden, um dort mit den gespeicherten Werten des Lernspeichers 46.4 verglichen zu werden.

Durch das Festhalten eines bestimmten Zustandes (insbesondere, 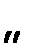 kein Metall in der Nähe 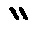 ) ergibt sich eine grössere Empfindlichkeit und Genauigkeit des erfindungsgemässen Sensors als das mit bisherigen Schaltungen erreicht werden konnte. Im Prinzip könnte der Zustand 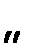 keine Magnetfeldstörung 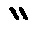 und die entsprechenden Signale auch anders als durch das Umschalten auf den geschilderten Lernprozess, etwa durch manuelle Abspeicherung vorbekannter Signalparameter im Speicherblock 46.4 erreicht werden, doch ist der geschilderte Lernprozess natürlich einfacher und genauer. Ferner müsste nicht der 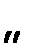 Ruhezustand 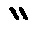 , d.h. der erwähnte Zustand 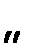 keine Magnetfeldstörung 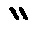 , zum Vergleich abgespeichert werden, obwohl dies bevorzugt ist, vielmehr könnte der umgekehrte Fall 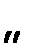 Störung durch bewegtes (oder unbewegtes) Objekt 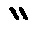 abgespeichert werden. Da Störungen jedoch im allgemeinen von nicht vorhersagbarer Grösse sind, ist die Abspeicherung des 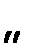 Ruhezustandes 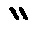 als Bezugswert günstiger.

Bei der zentralen Auswerteeinheit 47 kann es sich vorzugsweise um eine solche handeln, wie in der US-A-5,450,072 beschrieben ist. Die darin verwendete Ansteuereinheit 26 ist im Beispiel der vorliegenden Fig. 5 als mit einem Adressengenerator 48 zusammengefasst zu verstehen.

Dieser Adressengenerator 48 erzeugt ein Adressiersignal in einem Adressenleiter 49 (11 in der US-A-5,450,072), mit dessen Hilfe Adressierdetektoren 50 (28in der US-A-5,450,072) so angesteuert werden, wie dies in der genannten US-A- beschrieben ist.

Die Adressierdetektoren 50 erzeugen ein Adressiersignal 51 am Ort der Messwertgeber 20b bzw. 20b', das von der Auswerteschaltung 42 des jeweiligen Messwertgebers empfangen wird, wobei bei Anliegen dieses Signals die Ausgangsleitungen 43 und 44 mit den Signalleitern 45 und 46 verbunden werden. Wenn das Adressensignal 51 nicht anliegt, werden die Ausgänge 43 und 44 in einen Zustand mit hoher Impedanz geschalten.

Dadurch wird erreicht, dass nicht-adressierte Messwertgeber die Informationsübertragung nicht beeinflussen, und dass nur die Signale 43 und 44 der adressierten Messwertgeber an die Auswerteeinheit 47 geleitet werden.

Die Auswerteeinheit 47 weist einen, mit dem Adressiergenerator 48 verbundenen Zähler 52 auf, dessen Ausgänge 53 an das Speicherelement 46 angeschlossen sind. Auf diese Weise kann erreicht werden, dass den Daten aus den Messwertgebern 20b bzw. 20b' jeweils eine Nummer zugeordnet wird, die aus dem jeweiligen Stand des Zählers 52 abgeleitet ist, dessen Ausgänge am Speicherelement 46 anliegen, während einer der Messwertgeber 20b bzw. 20b' adressiert ist.

So kann im Speicherelement 46 der Auswerteeinheit 47 eine Serie von Daten abgelegt werden, die beispielsweise aus jeweils einer Hauptkomponente des Erdmagnetfeldes und dessen Gradienten bestehen können, und die den Feldstärkeverhältnissen am Orte der Messwertgeber 20b und 20b' entsprechen.

Die Auswerteeinheit 47 kann anschliessend auf Grund dieser Datenreihe, zu der noch der Abstand zwischen den Messertgebern 20b, 20b' als bekannte Grösse bzw. als Parameter hinzukommt, eine logische Verknüpfung (siehe die obigen Erläuterungen hierzu) vornehmen, deren Resultat ein Signal ist, das der Präsenz eines Objektes in der Überdeckungszone entspricht. Diese Verknüpfung kann zweckmässig auch mit Signalen vorgenommen werden, die nicht nur von einem einzigen Messwertgeber stammen.

So kann es sich sogar als vorteilhaft erweisen, an Stelle von zwei magnetisch sensiblen Elementen 41 pro Messwertgeber 20 nur ein einziges zu verwenden, zu welchem Zwecke es günstiger ist, die Messwertgeber dann in relativ kürzeren Abständen anzuordnen. Der Gradient kann dann beispielsweise aus der Differenz der Feldstärken von einander benachbarten Sensoren im Rechner am Kopfe des Sensorkabels errechnet werden.

## Patentansprüche

1. Verfahren zum Messen von Verzerrungen des Erdmagnetfeldes, die durch ein festzustellendes, zumindest teilweise ferromagnetisches Objekt (1) hervorgerufen werden, mit Hilfe eines mindestens einen Messwertgeber (20b) aufweisenden Objektsensors (20), **dadurch gekennzeichnet,**
a) dass die Abmessungen des Messwertgebers (20b) im wesentlichen klein im Vergleich zu denen dieses Objektes (1) gewählt werden, und
b) dass anschliessend mindestens zwei Signale unterschiedlicher Messwertgeber und/oder unterschiedlicher Komponenten, nämlich neben einer Hauptkomponente des Erdmagnetfeldes auch mindestens eine weitere Komponente oder mindestens eine aus einer Komponente des Erdmagnetfeldes abgeleitete physikalische Grösse nach der Abspeicherung eines vorbestimmten Zustandes, wie eines magnetisch ungestörten Zustandes, insbesondere in einem der Messung vorausgehenden 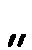 Lernprozess 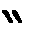 , zur Messung herangezogen werden.

2. Verfahren nach Anspruch 1, dadurch gekennzeichnet, dass der Abstand (g) zwischen ferromagnetischem Objekt und dem Messwertgeber (20b) klein im Vergleich zu den Abmessungen des ferromagnetischen Objektes (1) gewählt wird.

3. Verfahren nach Anspruch 2, dadurch gekennzeichnet, dass der Abstand (g) maximal das Zweihundertfache, vorzugsweise maximal das Hundertfache, insbesondere maximal das Fünfzigfache, der Abmessungen des jeweiligen Messwertgebers (20b) ausmacht und/oder maximal 70 cm, insbesondere maximal 50 cm und bevorzugt maximal 40cm beträgt.

4. Verfahren nach einem der vorhergehenden Ansprüche, dadurch gekennzeichnet, dass der Objektsensor (20) mit mindestens zwei in einem Abstand voneinander angeordneten Messwertgebern (20b; 20b, 20b') versehen wird, von denen der eine für die Hauptkomponente des Erdmagnetfeldes, der andere für mindestens eine weitere Komponente oder von einer Komponente abgeleitete physikalische Grösse des Erdmagnetfeldes herangezogen wird.

5. Verfahren nach einem der vorhergehenden Ansprüche, dadurch gekennzeichnet, dass der Objektsensor (20) unter dem festzustellenden Objekt (1), z.B. im Boden, verlegt wird (Fig. 1).

6. Verfahren nach einem der vorhergehenden Ansprüche, dadurch gekennzeichnet, dass der Ort der Aufstellung des Objektsensors (20) gegenüber dem des festzustellenden Objektes (1) in Richtung zum magnetischen Nordpol versetzt wird.

7. Objektsensor (20) mit mindestens einem Messwertgeber (20b), zur Durchführung des Verfahrens nach einem der vorhergehenden Ansprüche, dadurch gekennzeichnet,
a) dass die Abmessungen des Messwertgebers (20b) klein im Vergleich zu den Abmessungen des festzustellenden Objektes (1) sind; und
b) dass der Sensor (20) ausser zum Messen einer Hauptkomponente des Erdmagnetfeldes auch zum Messen mindestens einer weiteren Komponente oder mindestens einer aus einer Komponente des Erdmagnetfeldes abgeleiteten physikalischen Grösse ausgebildet ist.

8. Objektsensor nach Anspruch 7, dadurch gekennzeichnet, dass das Abmessungsverhältnis nach Merkmal a) maximal 1:2, vorzugsweise maximal 1:4, bevorzugt maximal 1:8, insbesondere maximal 1:20, gegebenenfalls maximal 1:50, z.B. maximal 1:100 beträgt.

9. Objektsensor nach Anspruch 7 oder 8, dadurch gekennzeichnet, dass er mindestens zwei in einem Abstand voneinander angeordnete Messwertgeber (20b; 20b, 20b') aufweist, von denen der eine (20b) der Messung der Hauptkomponente des Erdmagnetfeldes, der andere (20b') der Messung mindestens einer weiteren Komponente oder von einer Komponente abgeleiteten physikalischen Grösse des Erdmagnetfeldes zugeordnet ist, und deren Ausgänge vorzugsweise an den Eingang eines ODER-Gliedes geführt sind.

10. Objektsensor nach einem der Ansprüche 7 bis 9, dadurch gekennzeichnet, dass er eine Reihe von Messwertgebern (20b) aufweist, die an einem Sensorkabel (20c) zur Abfrage der Messwerte der Messwertgeber (20b) mit Hilfe einer Abfrageeinheit (33) angeordnet sind (Fig. 1).
